(19) Europäisches Patentamt / European Patent Office / Office européen des brevets

(11) **EP 1 655 857 B1**

(12) **FASCICULE DE BREVET EUROPEEN**

(45) Date de publication et mention
de la délivrance du brevet:
**09.12.2009 Bulletin 2009/50**

(51) Int Cl.:
***H04B 3/23*** (2006.01)

(21) Numéro de dépôt: **05292196.2**

(22) Date de dépôt: **19.10.2005**

(54) **Dispositif et procédé de détection d'une divergence d'un filtre adaptatif**

Verfahren und Vorrichtung zur Divergenzdetektion eines adaptiven Filters

Method and apparatus for detecting divergence of an adaptive filter

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **04.11.2004 FR 0411762**

(43) Date de publication de la demande:
**10.05.2006 Bulletin 2006/19**

(73) Titulaire: **FRANCE TELECOM
75015 Paris (FR)**

(72) Inventeur: **Le Tourneur, Grégoire
22700 St Quay-Perros (FR)**

(74) Mandataire: **Fréchède, Michel
Cabinet Plasseraud
52 rue de la Victoire
75440 Paris Cedex 09 (FR)**

(56) Documents cités:
**JP-A- 2003 324 370     US-A- 5 592 548**

- **PATENT ABSTRACTS OF JAPAN vol. 2003, no. 12, 5 décembre 2003 (2003-12-05) & JP 2003 324370 A (MATSUSHITA ELECTRIC WORKS LTD), 14 novembre 2003 (2003-11-14)**

## Description

L'invention se rapporte au traitement numérique de signaux audio et concerne, en particulier, la détection d'une divergence d'un système adaptatif.

Une application particulièrement intéressante de l'invention concerne la détection de la divergence du filtre adaptatif d'un annuleur d'écho d'un poste de télécommunications.

En effet, les postes de télécommunications équipés d'une fonction dite « mains libres » sont souvent sensibles à l'écho acoustique. Par exemple, dans le cas d'un poste téléphonique, l'écho acoustique apparaît lorsque le signal émis par le haut-parleur, qui correspond à un signal énoncé par un locuteur distant, est capté par le microphone. Cela se traduit alors, pour cet utilisateur distant, par la restitution, au niveau de l'écouteur, du signal avec un décalage par rapport à l'instant d'émission.

De même, la présence d'un transformateur de ligne 2 fils/4 fils dans les postes de télécommunications distants, qui se charge de traiter les signaux reçus pour les rendre compatibles avec la ligne téléphonique, est susceptible d'engendrer un écho électrique en renvoyant sur la ligne une partie du signal reçu.

L'écho électrique ou l'écho acoustique est susceptible de perturber les communications à partir du moment où le retard dans la chaîne devient important.

La réduction, voire l'annulation de l'écho, est obtenue en équipant les postes d'un dispositif annuleur d'écho AEC ou EEC. Ce type de dispositif incorpore généralement un algorithme de filtrage adaptatif dont les coefficients sont calculés de manière à minimiser l'erreur entre l'écho et une estimation de l'écho. Les coefficients sont calculés de manière récurrente à partir de coefficients préalablement calculés, de l'erreur entre l'estimation de l'écho et l'écho, du signal de référence et d'un pas d'adaptation $\mu$, à partir de la relation suivante :

$$H(n+1) = H(n) + \mu(n) * erreur(n) * f(X(n))$$

dans laquelle :

- H(n+1) et H(n) représentent les coefficients du filtre adaptatif à l'instant n+1 et à l'instant n, respectivement ;
- f(X(n)) est une fonction du vecteur des L derniers échantillons du signal émis X(n), variant selon les familles d'algorithmes considérés ;
- $\mu(n)$ représente le pas d'adaptation ; et
- erreur(n) représente la distance entre l'écho réel et l'écho estimé.

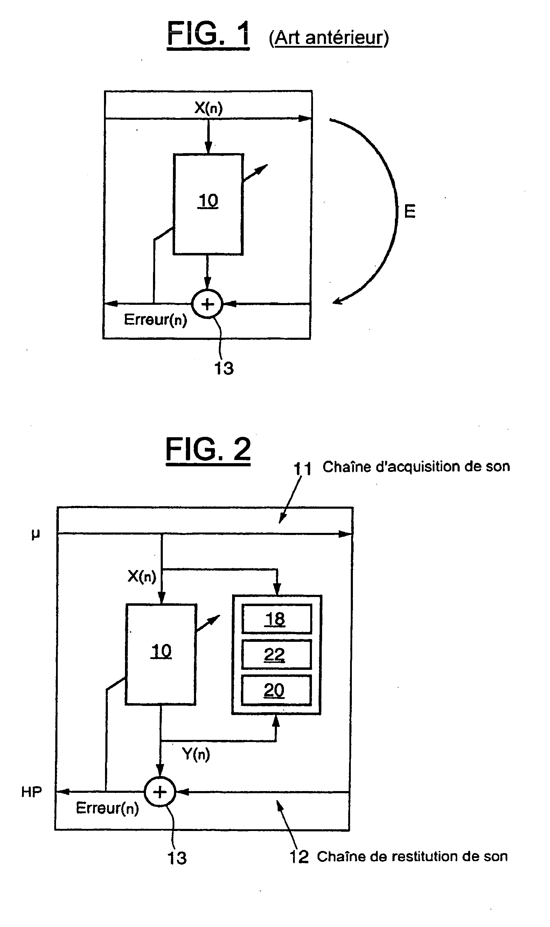

On a représenté sur la figure 1 l'architecture générale d'un module d'annulation d'écho, selon l'état de la technique. Un tel module incorpore un filtre adaptatif 10 qui assure, à partir du signal X(n) émis par un poste, une estimation de l'écho E électrique ou acoustique et qui utilise un soustracteur 13 pour soustraire l'estimation de l'écho à un signal reçu.

Comme on le sait, un tel filtre constitue un système fortement récursif, nécessitant un contrôle approprié pour garantir sa stabilité et pour obtenir une convergence. En effet, l'adaptation des coefficients selon l'équation mentionnée ci-dessus ne doit se faire qu'en présence d'écho seul pour estimer correctement l'écho réel, c'est-à-dire en l'absence de parole locale simultanée. Si cette condition n'est pas réalisée, l'adaptation ne se fera pas correctement et, à la limite, le filtre pourra devenir instable et se transformer en générateur de bruit. Cette sensibilité à l'instabilité est aggravée par la rapidité de convergence de l'algorithme. En effet, un algorithme rapide convergera vite vers un filtre optimal si le signal provenant d'un microphone ne contient que de l'écho, mais divergera aussi vite si un autre signal, par exemple de la parole, se superpose au signal d'écho.

Pour pallier cet inconvénient, diverses techniques peuvent être utilisées, de manière à brider l'adaptation du filtre, c'est-à-dire à n'autoriser la mise à jour des coefficients qu'en situation d'écho seul.

Une première technique consiste à utiliser des détecteurs d'activité vocale pour déterminer l'état du système. On applique la stratégie d'adaptation en fonction de l'état du système, de manière notamment à ne lancer l'adaptation des coefficients du filtre qu'en présence d'écho seul.

D'autres techniques consistent à transformer le pas d'adaptation, généralement fixe, en un paramètre tendant vers zéro en présence de parole, de manière à stopper l'adaptation des coefficients du filtre. On pourra, à cet effet, se référer à la demande de brevet français 96 05 312 au nom de la demanderesse.

Le document JP-A-2003 324370 décrit un système comparable basé sur le calcul du rapport d'énergie entre le signal du haut parleur et le signal du microphone.

Un tel système permet de diminuer la valeur du pas d'adaptation des coefficients du filtre, et donc la convergence du filtre. Toutefois, il ne permet en aucun cas de détecter une divergence de ce dernier.

**EP 1 655 857 B1**

D'autres techniques mettent enfin en oeuvre une comparaison de l'erreur après convergence au niveau du bruit de fond, afin de stopper l'adaptation et, par ce biais, de prévenir la divergence du filtre. On pourra, à cet effet, se référer au brevet US 5 477 535, dans lequel on bloque l'adaptation du filtre quand l'erreur entre l'estimation de l'écho et l'écho atteint une valeur de seuil, de manière à éviter toute divergence du filtre.

Selon ces différentes techniques, il s'agit essentiellement d'éviter toute divergence du filtre. Aucune solution n'est préconisée lorsque la divergence du filtre se produit malgré tout. Une telle divergence peut en effet apparaître dans des situations particulières de double parole prolongée, c'est-à-dire en présence de parole locale et distante, ou de variations très brusques d'acoustique devant le terminal, par exemple lorsqu'une feuille de papier est posée sur le micro du terminal.

Enfin, le document US 5 592 548 décrit un processus de fausse convergence d'un annuleur d'écho, par l'analyse du rapport entre la variance du signal d'écho et la variance du signal d'erreur, afin de permettre une convergence plus rapide du filtre adaptatif sur les signaux d'échos et réduire ces derniers.

Au vu de ce qui précède, le but de l'invention est de pallier les inconvénients de l'état de la technique et de permettre une détection de divergence dans un système adaptatif, afin de pouvoir mettre en oeuvre ultérieurement des procédures permettant de faire à nouveau converger le système.

L'invention a donc pour objet un dispositif de détection de divergence pour système adaptatif, comprenant des moyens de calcul de l'énergie d'un signal d'entrée du système, des moyens de calcul de l'énergie d'un signal de sortie du système et des moyens d'analyse de l'énergie du signal d'entrée et du signal de sortie pour détecter un accroissement de l'énergie du signal de sortie, relativement à l'énergie du signal d'entrée, en cas de divergence du système.

Selon une outre caractéristique de l'invention, le dispositif comporte des moyens de calcul du rapport entre l'énergie du signal de sortie et l'énergie du signal, d'entrée, et des moyens de comparaison pour comparer le rapport calculé avec une valeur de seuil correspondant à une divergence du système.

Selon une autre caractéristique de l'invention, le dispositif comporte en outre un compteur/décompteur destiné à être incrémenté et décrémenté en fonction du résultat de la comparaison réalisée par les moyens de comparaison et des moyens pour comparer la valeur de comptage du compteur/décompteur avec une valeur de seuil de détection de divergence.

Ainsi, alors que la détection de l'élévation de l'énergie du signal de sortie permet de détecter une divergence instantanée du système, l'utilisation d'un compteur, incrémenté à chaque fois que l'énergie du signal de sortie s'élève au-dessus d'un seuil prédéterminé, permet de détecter une situation de divergence établie afin d'éviter toute fausse alarme et de laisser au système la possibilité de converger à nouveau spontanément.

L'invention a également pour objet une utilisation d'un système tel que défini ci-dessus pour la détection d'une divergence d'un filtre adaptatif d'un annuleur d'écho d'un poste de télécommunications, d'un système mettant en oeuvre un algorithme prédictif ou d'un filtre numérique récursif.

Selon un autre objet, l'invention concerne un procédé de détection d'une divergence d'un système adaptatif, caractérisé en ce qu'il comporte cette étape consistant à :

- calculer l'énergie d'un signal d'entrée du système et l'énergie d'un signal de sortie du système ; et
- analyser l'énergie du signal d'entrée et du signal de sortie pour détecter un accroissement de l'énergie du signal de sortie, relativement à l'énergie du signal d'entrée, en cas de divergence.

Dans un mode de mise en oeuvre, au cours de l'analyse de l'énergie du signal d'entrée et du signal de sortie, on calcule le rapport entre l'énergie du signal de sortie et l'énergie du signal d'entrée et l'on compare le rapport calculé avec une valeur de seuil, et l'on incrémente ou l'on décrémente un compteur/décompteur en fonction du résultat de la comparaison.

On peut en outre incrémenter le compteur si le rapport est supérieur à une première valeur de seuil correspondant à une divergence du système.

On peut, par ailleurs, décrémenter le compteur si le rapport est inférieur à la valeur de seuil.

Selon une autre caractéristique du procédé selon l'invention, on compare en outre la valeur de comptage du compteur/décompteur avec une deuxième valeur de seuil de détection de divergence.

Par exemple, la valeur de seuil est une valeur de seuil fixe. On peut cependant utiliser une valeur de seuil variable.

D'autres buts, caractéristiques et avantages de l'invention apparaîtront à la lecture de la description suivante, donnée uniquement à titre d'exemple non limitatif, et faite en référence aux dessins annexés, sur lesquels :

- la figure 1, dont il a déjà été fait mention, illustre la structure d'un filtre adaptatif d'un annuleur d'écho conventionnel ;
- la figure 2 illustre la structure d'un filtre adaptatif d'un annuleur d'écho conforme à l'invention ;
- la figure 3 est une courbe illustrant la variation en fonction du temps des coefficients du filtre lorsque le système a convergé
- la figure 4 est une courbe montrant l'évolution en fonction du temps des coefficients du filtre en cas de divergence ;

- la figure 5 est un schéma illustrant le comportement du dispositif de détection conforme à l'invention en cas de convergence ;
- la figure 6 est un schéma illustrant le comportement du dispositif de détection de divergence conforme à l'invention en cas de divergence ;
- la figure 7 représente un organigramme des étapes permettant la mise en oeuvre du procédé objet de l'invention.

Sur la figure 2, on a représenté l'architecture générale d'un dispositif de détection de divergence pour un système adaptatif conforme à l'invention.

Un tel dispositif peut être utilisé pour détecter la divergence de tout type de système mettant en oeuvre un algorithme adaptatif, tel qu'un annuleur d'écho électrique, un algorithme de prédiction, un filtre numérique récursif, ... Un tel dispositif peut également être utilisé, de manière générale, pour détecter la divergence de tout algorithme adaptatif sujet à l'instabilité.

Sur la figure 2, la référence numérique générale 10 illustre, comme sur la figure 1, le filtre adaptatif de fonction de transfert H dont il convient de détecter la divergence. Dans l'exemple de réalisation considéré, ce filtre est constitué par un annuleur d'écho acoustique ou électrique qui se charge, comme connu en soi, d'assurer une estimation de l'écho véhiculé sur une chaîne de restitution de sons 12 raccordée au haut-parleur d'un poste de télécommunications (non représenté), à partir d'un signal X(n) véhiculé sur une chaîne d'acquisition de sons 11 raccordée à un microphone (non représenté) du poste de télécommunications et de soustraire l'écho estimé au signal reçu sur la chaîne de restitution de sons au moyen d'un soustracteur 13.

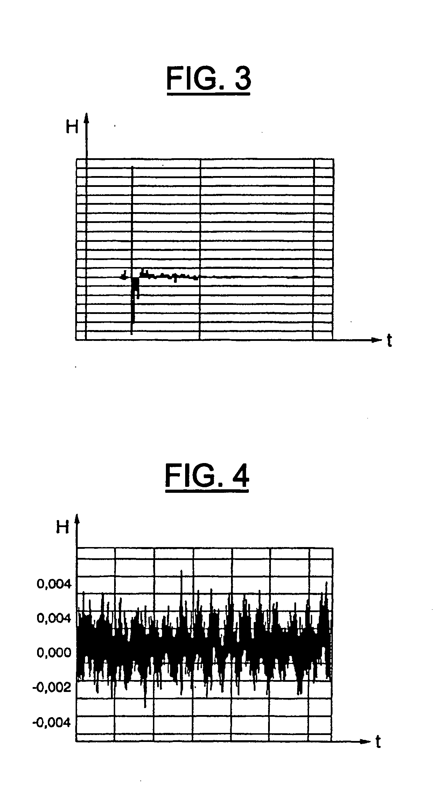

En se référant à la figure 3, en fonctionnement normal, c'est-à-dire lorsque le filtre 10 a convergé, les coefficients du filtre sont une approximation de la réponse impulsionnelle du système à estimer, c'est-à-dire de l'écho. Ainsi, cette réponse correspond, soit à une réponse de couplage électrique d'un transformateur 2 fils/4 fils, soit à une réponse de couplage entre un système de prise de son et un système de restitution sonore connectés respectivement à la chaîne d'acquisition de sons 11 et à la chaîne de restitution de sons 12.

Comme on le voit sur cette figure 3, la réponse impulsionnelle possède tout d'abord un pic plus ou moins marqué en début de réponse, correspondant au couplage direct, suivi d'une zone correspondant aux diverses réflexions et échos lointains. Chaque réponse impulsionnelle est unique et caractéristique, mais possède cependant l'allure représentée sur la figure 3. Au contraire, comme représenté sur la figure 4, en cas de divergence, la sortie du filtre 10 ressemble à un générateur de bruit, et les coefficients du filtre prennent des valeurs incohérentes.

En calculant les estimées des énergies des signaux en entrée et en sortie du filtre, et en détectant un accroissement relatif de l'énergie du signal de sortie du filtre, correspondant à l'estimée de l'écho, il est possible de retrouver l'ordre de grandeur de l'énergie de la réponse impulsionnelle, ou encore la valeur de couplage au carré.

Ainsi, en se référant à nouveau à la figure 2, le dispositif selon l'invention, qui est par exemple constitué par un module logiciel intégré à un système de traitement numérique de signaux acoustiques ou électriques incorporant par ailleurs l'annuleur de l'écho acoustique ou électrique 10, comporte un premier module 18 de calcul de l'énergie d'un signal de référence X(n) constitué par le signal émis par un microphone, transmis sur la chaîne d'acquisition de sons 11, un deuxième module 20 de calcul de l'énergie du signal de sortie du filtre 10 constituant le signal estimé de l'écho Y(n) et un troisième module 22 de calcul du rapport R entre le signal de sortie Y(n) du filtre 10 et le signal d'entrée X(n) du filtre 10.

Ce rapport R reste relativement constant, la réponse impulsionnelle physique du filtre ne variant pas dans des proportions importantes dans le temps, en particulier dans une échelle de temps correspondant à la durée d'une communication. De plus, cette grandeur croît avec la convergence du filtre, la valeur initiale étant zéro lorsque le filtre n'a pas encore convergé.

Lorsque le filtre a convergé, le rapport R est toujours inférieur à un seuil proportionnel à la valeur de l'énergie du filtre à identifier, ou du couplage du système à identifier.

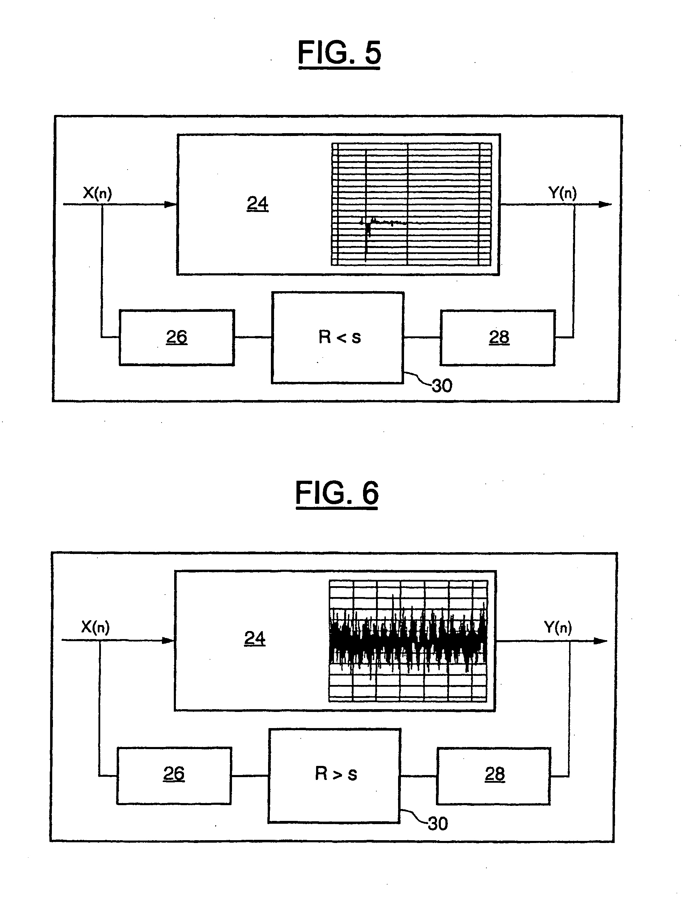

En effet, en référence à la figure 5 qui représente les principales phases du procédé selon l'invention, après calcul des coefficients du filtre (étape 24), il est procédé au calcul de l'énergie du signal d'entrée X(n) et du signal de sortie Y(n) (étapes 26 et 28). L'accroissement relatif de l'énergie du signal de sortie est calculé lors de l'étape 30 suivante par calcul du rapport R entre l'énergie du signal de sortie et l'énergie du signal d'entrée et comparaison de ce rapport avec une première valeur de seuil s.

Par contre, en cas de divergence, comme visible sur la figure 6 sur laquelle des étapes identiques à celles de la figure 5 sont désignées par les mêmes références, la relation liant le rapport R des énergies et le couplage ou l'énergie du filtre à identifier, n'est plus vérifiée. Il y a un accroissement brusque et rapide de ce rapport R. Il a par ailleurs été constaté que cet accroissement se prolonge sur une durée relativement longue.

La détection de la divergence est dès lors basée sur le dépassement d'un seuil prédéterminé. En effet, lorsqu'une divergence se produit, le rapport R reste supérieur, en permanence, à cette valeur de seuil s (étape 30).

Il convient donc de détecter la divergence, tout en évitant les fausses alarmes.

Pour ce faire, lors de l'analyse des énergies, la grandeur R est comparée par le module de calcul 22 à une deuxième valeur de seuil et, lorsque la valeur R dépasse ce seuil, un compteur/décompteur incorporé par exemple au module de calcul 22 est incrémenté. Au contraire, lorsque le rapport R redevient inférieur à la valeur de seuil, le compteur/décompteur est décrémenté. On décide alors que la divergence est établie dès que la valeur de comptage du compteur/décompteur dépasse une valeur de seuil prédéterminée, afin d'éviter les fausses détections intempestives. On notera cependant que la décrémentation du compteur/décompteur, si le rapport R devient inférieur à la valeur de seuil, permet d'éviter de détecter une divergence lorsque se produit un cumul de dépassements isolés au cours d'une communication.

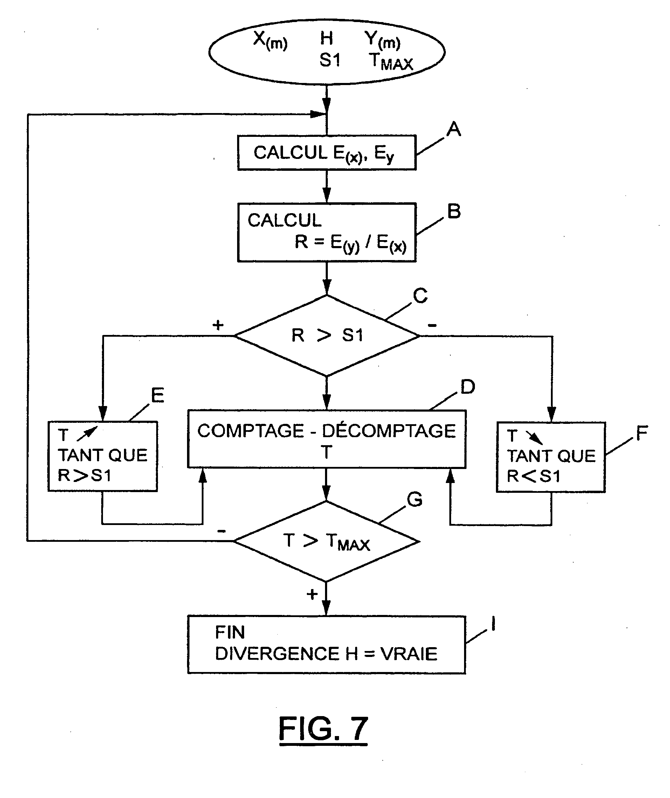

La mise en oeuvre du procédé objet de l'invention telle que décrite, est illustrée en référence à la figure 7.

Dans la figure 7 précitée

H désigne la fonction de transfert du filtre ;
X(n) et Y(n) désignent le signal en entrée respectivement en sortie du filtre 10;
A désigne l'étape de calcul de l'estimée des énergies E(x) du signal X(n) et E(y) du signal Y(n). Le calcul de chacune des énergies précitées peut être concomitant ou successif ;
B désigne l'étape de calcul du rapport R=E(y)/E(x) ;
C désigne l'étape de comparaison de la valeur du rapport à une première valeur de seuil S1.

La valeur de S 1 peut être variable ;

D désigne une étape d'initialisation et de comptage-décomptage concomitante à l'étape C de comparaison et délivrant une valeur de comptage temporel T;
E désigne une étape d'incrémentation, comptage, du comptage-décomptage D, tant que la comparaison de supériorité R>S 1 est vérifiée ;
F désigne une étape de décrémentation, décomptage, du comptage-décomptage D, tant que la comparaison de supériorité R>S1 n'est pas vérifiée ;
G désigne une étape de comparaison de la valeur de comptage temporel T à une deuxième valeur de seuil $T_{MAX}$. Une réponse négative à l'étape de comparaison de test G est suivie d'un retour à l'étape A pour poursuite du procédé. Une réponse positive à l'étape de comparaison de test est suivie d'une étape de fin du procédé, la divergence du filtre de fonction de transfert H étant vérifiée et détectée ;
I désigne une étape de fin de procédé dans laquelle la divergence de la fonction de transfert H du filtre est vérifiée à la valeur vraie.

On notera également que cette méthode de détection de divergence possède en outre l'avantage de s'affranchir de détections de double parole, les calculs étant effectués sur des signaux concernant uniquement le signal reçu. Il n'y a donc aucune interaction avec la double parole pour la détection des divergences, rendant plus fiable le système.

Le choix de la première valeur de seuil avec laquelle le rapport R est comparé et de la deuxième valeur de seuil avec laquelle le niveau de comptage du compteur/décompteur est comparé, permet d'adapter le dispositif de détection de divergence au système auquel il s'applique. En effet, plus ces seuils seront grands, plus la détection de divergence est fiable, mais plus la décision tardera à être active. Pour les annuleurs d'écho, un compromis est à déterminer pour éviter la génération désagréable d'un bruit en sortie de filtre. Une fois réglé, le système permet un déclenchement suffisamment rapide et fiable pour ne pas percevoir la divergence du filtre.

On notera enfin que la première valeur de seuil peut être constituée par une valeur de seuil fixe, mais peut également être une valeur variable, par exemple dépendante d'une fonction. En particulier, pour un module annuleur d'écho, on peut utiliser un seuil de détection variant en fonction de la loi d'évolution des coefficients du filtre et, après convergence, utiliser un seuil fixe.

Après détection d'une divergence, un traitement peut alors être mis en oeuvre pour supprimer la cause de la divergence. A titre d'exemple, il est possible de remettre à zéro les coefficients du filtre adaptatif ou les restaurer dans un état correspondant à une convergence. Il est également possible de modifier la valeur du pas d'adaptation de l'algorithme ou mettre en oeuvre toute autre procédure visant à rendre le système plus stable.

## Revendications

**1.** Dispositif de détection de divergences pour système adaptatif comportant des moyens de calcul de l'énergie d'un signal d'entrée du système, des moyens de calcul (20) de l'énergie du signal de sortie du système et des moyens d'analyse (22) de l'énergie du signal d'entrée et du signal de sortie pour détecter un accroissement de l'énergie du signal de sortie, **caractérisé en ce que** lesdits moyens d'analyse comportent :

- des moyens de calcul (22) du rapport entre l'énergie du signal de sortie et l'énergie du signal d'entrée ;
- des moyens de comparaison pour comparer le rapport calculé avec une valeur de seuil correspondant à une divergence du système.

**2.** Dispositif selon la revendication 1, **caractérisé en ce qu'**il comporte en outre un compteur/décompteur destiné à être incrémenté et décrémenté en fonction des résultats de la comparaison réalisée par les moyens de comparaison, et des moyens pour comparer la valeur de comptage du compteur/décompteur avec une valeur de seuil de détection de divergence.

**3.** Utilisation d'un dispositif selon l'une des revendications 1 ou 2, pour la détection d'une divergence d'un filtre adaptatif dans un annuleur d'écho d'un poste de télécommunications, d'un système mettant en oeuvre un algorithme prédictif ou d'un filtre numérique récursif.

**4.** Procédé de détection d'une divergence d'un système adaptatif, comportant une étape consistant à calculer l'énergie d'un signal d'entrée du système et l'énergie d'un signal de sortie du système, **caractérisé en ce qu'**il consiste en outre, à analyser l'énergie du signal d'entrée et du signal de sortie pour détecter un accroissement de l'énergie du signal de sortie, relativement à l'énergie du signal d'entrée, en cas de divergence, ladite étape consistant à analyser incluant :

le calcul du rapport entre l'énergie du signal de sortie et l'énergie du signal d'entrée et la comparaison du rapport calculé avec une valeur de seuil correspondant à une divergence du système.

**5.** Procédé selon la revendication 4, **caractérisé en ce que** l'on procède à l'incrémentation respectivement la décrémentation d'un compteur/décompteur en fonction des résultats de la comparaison.

**6.** Procédé selon la revendication 5, **caractérisé en ce que** l'on incrémente le compteur si le rapport est supérieur à une première valeur de seuil correspondant à une divergence du système.

**7.** Procédé selon l'une des revendications 5 ou 6, **caractérisé en ce que** l'on décrémente le compteur si le rapport est inférieur à la valeur de seuil.

**8.** Procédé selon l'une quelconque des revendications 5 à 7, **caractérisé en ce que** l'on compare en outre la valeur de comptage du compteur/décompteur avec une deuxième valeur de seuil de détection de divergence.

**9.** Procédé selon l'une quelconque des revendications 4 à 8, **caractérisé en ce que** la première valeur de seuil est une valeur de seuil fixe.

**10.** Procédé selon l'une quelconque des revendications 4 à 8, **caractérisé en ce que** la première valeur de seuil est variable.

## Claims

**1.** Divergence detection device for adaptive system, comprising means for calculating the energy of an input signal of the system, means for calculating (20) the energy of an output signal of the system and means for analysing (22) the energy of the input signal and of the output signal so as to detect a rise in the energy of the output signal, **characterized in that** said analysing means comprise:

- means for calculating (22) the ratio between the energy of the output signal and the energy of the input signal;
- means of comparison for comparing the ratio calculated with a threshold value corresponding to a divergence of the system.

**2.** Device according to Claim 1, **characterized in that** it furthermore comprises an up/down counter intended to be incremented and decremented as a function of the results of the comparison carried out by the means of comparison, and means for comparing the count value of the up/down counter with a divergence detection threshold value.

**3.** Use of a device according to either of Claims 1 and 2, for the detection of a divergence of an adaptive filter in an echo canceller of a telecommunications facility, of a system implementing a predictive algorithm or of a recursive digital filter.

4. Method of detecting a divergence of an adaptive system, comprising a step consisting in calculating the energy of an input signal of the system and the energy of an output signal of the system, **characterized in that** it further consists in analysing the energy of the input signal and of the output signal so as to detect a rise in the energy of the output signal, relative to the energy of the input signal, in case of divergence, said step consisting in analysing including:

the calculation of the ratio between the energy of the output signal and the energy of the input signal and the comparison of the ratio calculated with a threshold value corresponding to a divergence of the system.

5. Method according to Claim 4, **characterized in that** the up/down counter is incremented, respectively decremented as a function of the results of the comparison.

6. Method according to Claim 5, **characterized in that** the counter is incremented if the ratio is greater than a first threshold value corresponding to a divergence of the system.

7. Method according to either of Claims 5 and 6, **characterized in that** the counter is decremented if the ratio is less than the threshold value.

8. Method according to any one of Claims 5 to 7, **characterized in that** the count value of the up/down counter is moreover compared with a second divergence detection threshold value.

9. Method according to any one of Claims 4 to 8, **characterized in that** the first threshold value is a fixed threshold value.

10. Method according to any one of Claims 4 to 8, **characterized in that** the first threshold value is variable.

**Patentansprüche**

1. Vorrichtung zur Erfassung von Divergenzen für ein adaptives System, die Einrichtungen zur Berechnung der Energie eines Eingangssignals des Systems, Einrichtungen (20) zur Berechnung der Energie des Ausgangssignals des Systems und Einrichtungen (22) zur Analyse der Energie des Eingangssignals und des Ausgangssignals aufweist, um einen Anstieg der Energie des Ausgangssignals zu erfassen, **dadurch gekennzeichnet, dass** die Analyseeinrichtungen aufweisen:

- Einrichtungen (22) zur Berechnung des Verhältnisses zwischen der Energie des Ausgangssignals und der Energie des Eingangssignals;
- Vergleichseinrichtungen, um das berechnete Verhältnis mit einem Schwellwert zu vergleichen, der einer Divergenz des Systems entspricht.

2. Vorrichtung nach Anspruch 1, **dadurch gekennzeichnet, dass** sie außerdem einen Vorwärts-Rückwärtszähler, der dazu bestimmt ist, in Abhängigkeit von den Ergebnissen des von den Vergleichseinrichtungen durchgeführten Vergleichs inkrementiert und dekrementiert zu werden, und Einrichtungen aufweist, um den Zählwert des Vorwärts-Rückwärtszählers mit einem Divergenz-Erfassungsschwellwert zu vergleichen.

3. Verwendung einer Vorrichtung nach einem der Ansprüche 1 oder 2 zur Erfassung einer Divergenz eines adaptiven Filters in einem Echounterdrücker eines Telekommunikationsgeräts, eines einen prädiktiven Algorithmus anwendenden Systems oder eines rekursiven digitalen Filters.

4. Verfahren zur Erfassung einer Divergenz eines adaptiven Systems, das einen Schritt aufweist, der darin besteht, die Energie eines Eingangssignals des Systems und die Energie eines Ausgangssignals des Systems zu berechnen, **dadurch gekennzeichnet, dass** es außerdem darin besteht, die Energie des Eingangssignals und des Ausgangssignals zu analysieren, um einen Anstieg der Energie des Ausgangssignals bezüglich der Energie des Eingangssignals im Fall einer Divergenz zu erfassen, wobei der aus der Analyse bestehende Schritt umfasst:

die Berechnung des Verhältnisses zwischen der Energie des Ausgangssignals und der Energie des Eingangssignals und den Vergleich des berechneten Verhältnisses mit einem Schwellwert entsprechend einer Divergenz des Systems.

5. Verfahren nach Anspruch 4, **dadurch gekennzeichnet, dass** die Inkrementierung bzw. die Dekrementierung eines Vorwärts-Rückwärtszählers in Abhängigkeit von den Ergebnissen des Vergleichs durchgeführt wird.

6. Verfahren nach Anspruch 5, **dadurch gekennzeichnet, dass** der Zähler inkrementiert wird, wenn das Verhältnis größer als ein erster Schwellwert entsprechend einer Divergenz des Systems ist.

7. Verfahren nach einem der Ansprüche 5 oder 6, **dadurch gekennzeichnet, dass** der Zähler dekrementiert wird, wenn das Verhältnis unter dem Schwellwert liegt.

8. Verfahren nach einem der Ansprüche 5 bis 7, **dadurch gekennzeichnet, dass** außerdem der Zählwert des Vorwärts-Rückwärtszählers mit einem zweiten Divergenz-Erfassungsschwellwert verglichen wird.

9. Verfahren nach einem der Ansprüche 4 bis 8, **dadurch gekennzeichnet, dass** der erste Schwellwert ein fester Schwellwert ist.

10. Verfahren nach einem der Ansprüche 4 bis 8, **dadurch gekennzeichnet, dass** der erste Schwellwert variabel ist.

## FIG. 1 (Art antérieur)

## FIG. 2

11 Chaîne d'acquisition de son

12 Chaîne de restitution de son

## FIG. 3

## FIG. 4

## FIG. 5

X(n) → [ 24 ] → Y(n)

[ 26 ] — [ R < s ] — [ 28 ]
                 30

## FIG. 6

X(n) → [ 24 ] → Y(n)

[ 26 ] — [ R > s ] — [ 28 ]
                 30

$$X_{(m)} \quad H \quad Y_{(m)}$$
$$S1 \quad T_{MAX}$$

CALCUL $E_{(x)}$, $E_y$ — A

CALCUL
$R = E_{(y)} / E_{(x)}$ — B

C

$+$ ← $R > S1$ → $-$

E —
T
TANT QUE
$R > S1$

COMPTAGE - DÉCOMPTAGE
T — D

T
TANT QUE
$R < S1$ — F

G

$-$ ← $T > T_{MAX}$

$+$

FIN
DIVERGENCE H = VRAIE — I

## FIG. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 9605312
- JP 2003324370 A
- US 5477535 A
- US 5592548 A